(19) Europäisches Patentamt
European Patent Office
Office européen des brevets

(11) Veröffentlichungsnummer: **0 324 315**
**A2**

(12) **EUROPÄISCHE PATENTANMELDUNG**

(21) Anmeldenummer: **88810841.2**

(51) Int. Cl.[4]: **C08G 73/10 , C08G 73/14**

(22) Anmeldetag: **07.12.88**

The title of the invention has been amended (Guidelines for Examination in the EPO, A-III, 7.3).

(30) Priorität: **15.12.87 CH 4880/87**

(43) Veröffentlichungstag der Anmeldung: **19.07.89 Patentblatt 89/29**

(84) Benannte Vertragsstaaten: **CH DE FR GB IT LI NL SE**

(71) Anmelder: **CIBA-GEIGY AG**
**Klybeckstrasse 141**
**CH-4002 Basel(CH)**

(72) Erfinder: **Pfaendner, Rudolf, Dr.**
**Sackgasse 3**
**D-6149 Rimbach/Odenwald 1(DE)**

(54) **Polyamid-Polyimid-Blockcopolymere.**

(57) Polyamid-Polyimid-Blockcopolymere mit einem mittleren Molekulargewicht $\overline{M}_n$ von 1000-50'000 enthaltend wiederkehrende Einheiten der Formel I

$\{(PA)\text{-}(PI)\}$ (I),

worin (PA) für einen Polyamidblock mit einem mittleren Molekulargewicht $\overline{M}_n$ von 300-20'000 steht, enthaltend mindestens eine (wiederkehrende) Einheit der Formel II

EP 0 324 315 A2

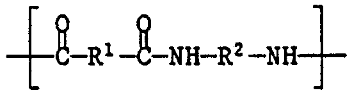 (II),

worin $R^1$ 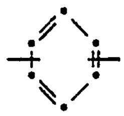 , 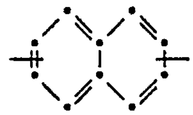 oder 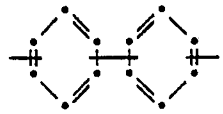 ist, und

$R^2$ $-(C_nH_{2n})-$ , 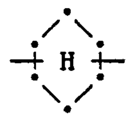 , 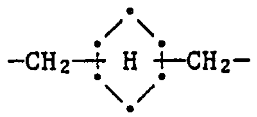 , 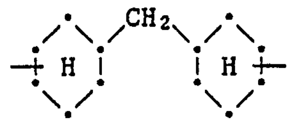 ,

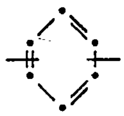 , 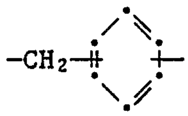 , 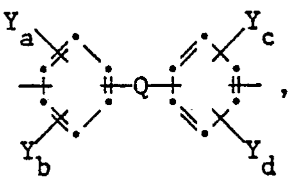 , 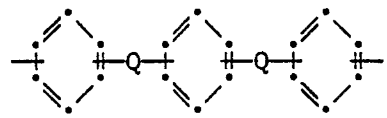

oder 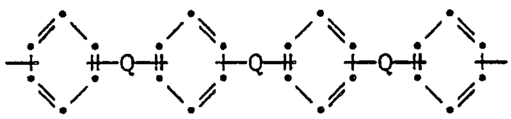 bedeutet, worin

Q die direkte Bindung, $-CH_2-$, $-CH_2CH_2-$, $CH_3-\overset{|}{\underset{|}{C}}-CH_3$, -O-, -S-, $-SO_2-$, oder -C(O)- ist, und n 2-12 ist, und $Y_a$, $Y_b$, $Y_c$ und $Y_d$ unabhängig voneinander Wasserstoff, Halogen oder $C_1$-$C_4$-Alkyl bedeuten, und (PI) für einen Polyimidblock mit einem mittleren Molekulargewicht $\overline{M}n$ von 300-20'000 steht, enthaltend mindestens eine (wiederkehrende) Einheit der Formel III

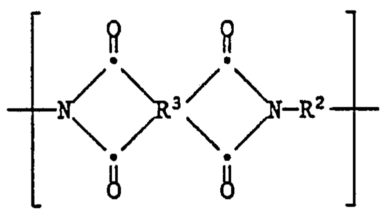 (III),

worin $R^3$ 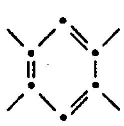 , 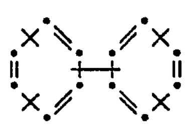 oder 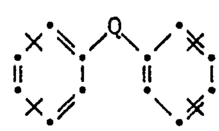 ist,

und Q und $R^2$ die oben angegebene Bedeutung haben, mit der Massgabe, dass 25-100 Mol-% aller Brückenglieder

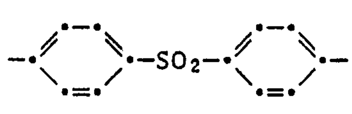

und/oder

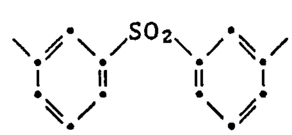

bedeuten, und der (cyclo-)aliphatische Anteil an Brückgliedern $R^2$ nicht mehr als 10 Mol-% beträgt.

Diese sind löslich in aprotischen, dipolaren Lösungsmitteln, was zu diversen anwendungstechnischen Vorteilen, z.B. bei der Herstellung von Laminaten oder Ueberzugsmittel führt.

## Neue Polymere

Die vorliegende Erfindung betrifft neue Polyamid-Polyimid-Blockcopolymere.

Polyamid-Polyimid-Blockcopolymere sind bekannt. Diese eignen sich wegen ihrer guten elektrischen, thermischen und/oder mechanischen Eigenschaften z.B. als Matrixharze u.a. für die Herstellung von Verbundwerkstoffen, als Beschichtungsharze in der Elektro- und Electronic-Industrie, als flexible Laminierharze, z.B. für gedruckte Schaltungen, als Klebfilme oder als Pressmassen. Uebliche Polyamid-Polyimid-Blockcopolymere sind in organischen Lösungsmittel unlöslich oder nur wenig löslich, s. dazu beispielsweise US 3,894,114 oder US 4,503,285. Daher muss zur Ausnützung der guten Eigenschaften der Polyamid-Polyimid-Blockpolymeren von der gut löslichen Vorstufe, den Polyamid-Polyamidsäure-Blockcopolymeren ausgegangen werden. Die gewünschten Endprodukte werden durch Imidisierung erhalten. Diese Vorgehensweise ist jedoch in mancher Hinsicht nicht befriedigend. Einmal sind die löslichen Vorprodukte nur bedingt lagerstabil, da die durch Ringschluss entstehende Wassermenge zu einem Molekulargewichtsabbau und/oder der Ringschluss zu einem Ausfällen des Polymeren führt. Wird ausserdem die Imidisierung erst bei der Verarbeitung z.B. zu Folien, Beschichtungen oder Formkörpern durchgeführt, kann das entstehende Produkt, bewirkt durch das austretende Wasser, Fehlstellen wie Löcher und/oder Blasen aufweisen.

Es besteht daher der Wunsch, Polyamid-Polyimid-Blockcopolymere zu finden, die diese Nachteile nicht besitzen. Ein lösliches Polyamid-Polyimid-Blockcopolymer würde die beschriebenen Mängel nicht aufweisen. Es wurde nun überraschenderweise gefunden, dass Polyamid-Polyimid-Blockcopolymere in aprotischen, dipolaren Lösungsmitteln gut löslich sind, wenn sie in den Polyamidblöcken und/oder den Polyimidblöcken Brückenglieder enthal ten, welche sich von Diaminodiphenylsulfon ableiten. Diese Erkenntnis kommt für den Fachmann unerwartet, da es zum Beispiel bekannt ist, dass Polyimide, welche sich von Benzophenontetracarbonsäuredianhydrid und Diaminodiphenylsulfon ableiten, unlöslich sind (s. z.B. US 4,588,804).

Die vorliegende Erfindung betrifft Polyamid-Polyimid-Blockcopolymere mit einem mittleren Molekulargewicht $\overline{M}_n$ von 1000-50'000 enthaltend wiederkehrende Einheiten der Formel I

$$\left[(PA)\text{-}(PI)\right] \quad \text{(I)},$$

worin (PA) für einen Polyamidblock mit einem mittleren Molekulargewicht $\overline{M}_n$ von 300-20'000 steht, enthaltend mindestens eine (wiederkehrende) Einheit der Formel II

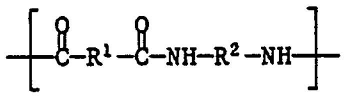 (II),

worin $R^1$ 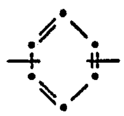 , 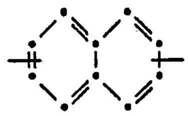 oder 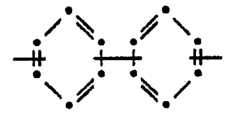 ist, und

$R^2$ $-(C_nH_{2n})-$ , 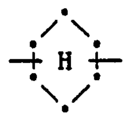 , 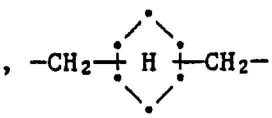 , 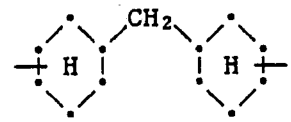 ,

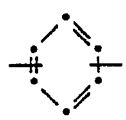 , 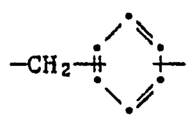 , 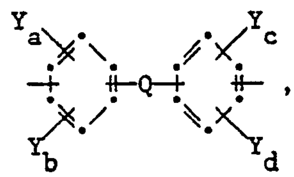 , 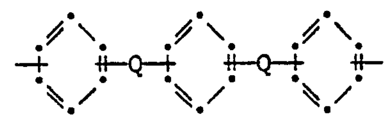

oder 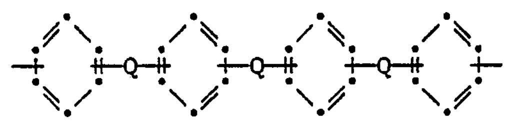 bedeutet, worin

Q die direkte Bindung, $-CH_2-$, $-CH_2CH_2-$, $CH_3$-C-$CH_3$, -O-, -S-, $-SO_2-$, oder -C(O)- ist, und n 2-12 ist, und $Y_a$, $Y_b$, $Y_c$ und $Y_d$ unabhängig voneinander Wasserstoff, Halogen oder $C_1$-$C_4$-Alkyl bedeuten, und (PI) für einen Polyimidblock mit einem mittleren Molekulargewicht $\overline{M}_n$ von 300-20'000 steht, enthaltend mindestens eine (wiederkehrende) Einheit der Formel III

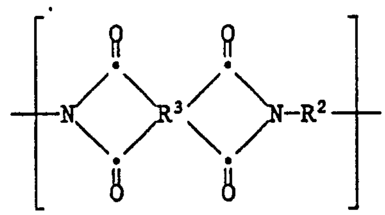 (III),

worin $R^3$ 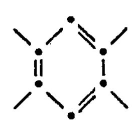 , 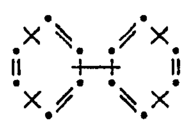 oder 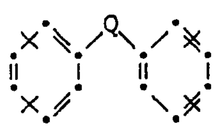 ist,

und Q und $R^2$ die oben angegebene Bedeutung haben, mit der Massgabe, dass 25-100 Mol-% aller Brückenglieder

$R^2$ 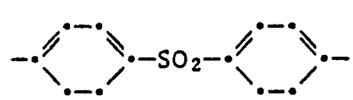

und/oder

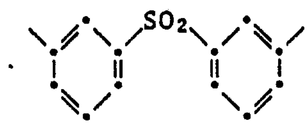

bedeuten, und der (cyclo-)aliphatische Anteil an Brückengliedern $R^2$ nicht mehr als 10 Mol-% beträgt.

Bevorzugte Verbindungen der Formel I besitzen ein mittleres Molekulargewicht $\overline{M}_n$ von 4000-40'000.

In bevorzugten Verbindungen der Formel I enthalten die Polyamidblöcke und/oder die Polyimidblöche mehr als eine wiederkehrende Struktureinheit der Formel II bzw. der Formel III. Dies ergibt für bevorzugte Polyamidblöcke bzw. Polyimidblöcke ein mittleres Molekulargewicht von 500-20'000.

In den obenstehenden Formeln bedeutet $R^1$ z.B. Phenylen-1,2; Phenylen-1,3; Phenylen-1,4; Naphthylen-1,5; Naphthylen-1,8; Naphthylen-2,3; Biphenylen-3,3′ oder Biphenylen-4,4′. Bevorzugt ist Phenylen-1,3.

$R^2$ in den Formeln II und/oder III ist erfindungsgemäss dadurch charakterisiert, dass in 25-100 Mol-% und insbesondere 50-100 Mol-% der im Copolymeren der Formel I vorkommenden Brückenglieder $R^2$ Gruppen der Formeln

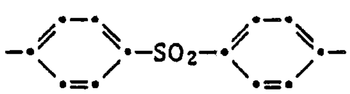 oder 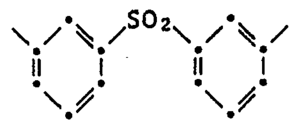

bedeuten. Dabei ist es nicht zwingend, dass sowohl Polyamid- wie auch Polyimidblöcke solche Brückenglieder enthalten.

Bedeutet $R^2$ eine Gruppe $-(C_nH_{2n})-$ so handelt es sich beispielsweise um Ethylen-1,2; Propylen-1,3; Tetramethylen-1,4; Pentamethylen-1,5; Hexamethylen-1,6; Heptamethylen-1,7; Octamethylen-1,8; Nonamethylen-1,9; Decamethylen-1,10; Dodecamethylen-1,12; Decamethylen-2,9; oder 2-Methylpentamethylen-1,5.

Ist $R^2$ eine Gruppe

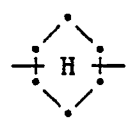 ,

so kann es sich um Cyclohexylen-1,2; Cyclohexylen-1,3 oder Cyclohexylen-1,4 handeln.

Weitere Beispiele für spezifische aliphatische Gruppen $R^2$ sind

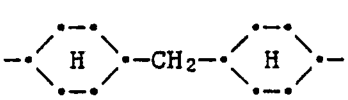 , 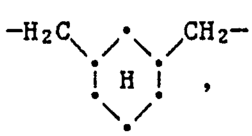 , 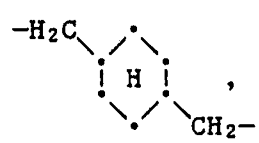 ,

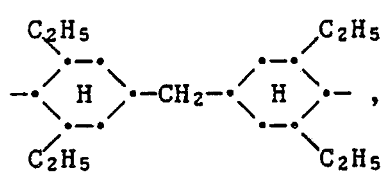 , 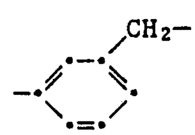 oder 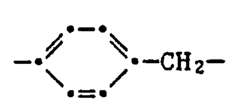 .

Beispiele für spezifische aromatische Gruppen $R^2$ sind Phenylen-1,2; Phenylen-1,3; Phenylen-1,4; Methylphenylen-2,4; 1,3,5-Trimethylphenylen-2,5; Xylylen-2,5; 4-Chlorphenylen-1,3; 2,5-Dichlorphenylen-1.4; der einer der folgenden Gruppen

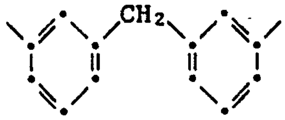 , 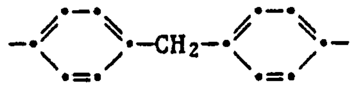 , 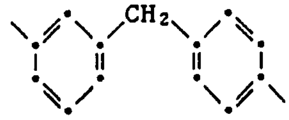 ,

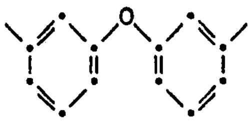 , 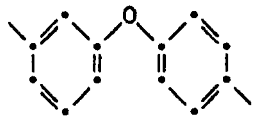 , 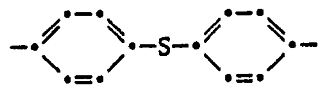 ,

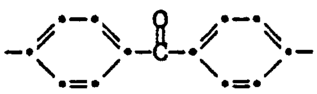 , 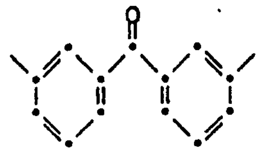 , 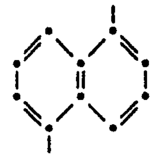 , 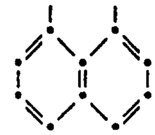 ,

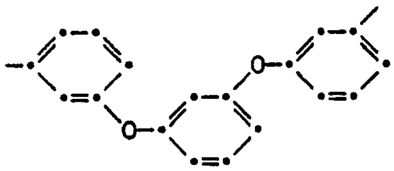 , 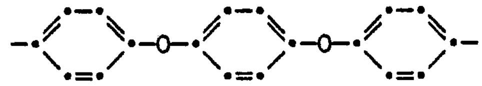 ,

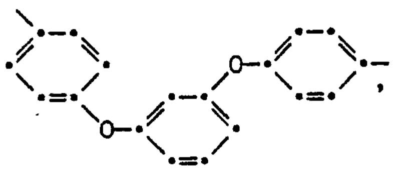 , 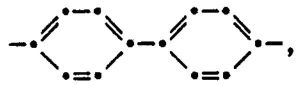 , 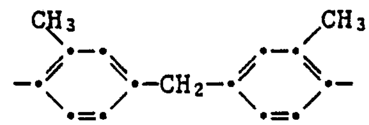 ,

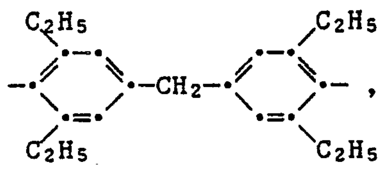 , 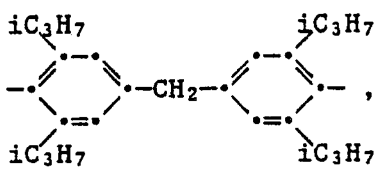 , 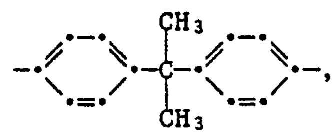 ,

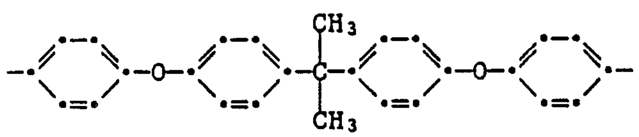 ,

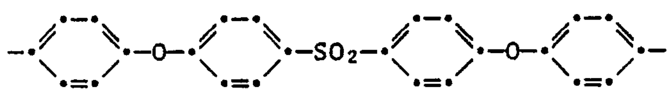 ,

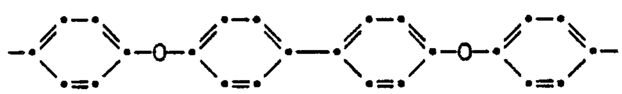 ,

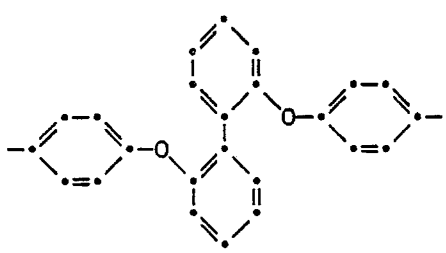 und insbesondere die Gruppen

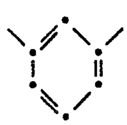 , 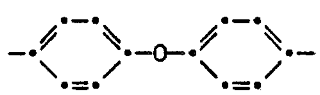 , 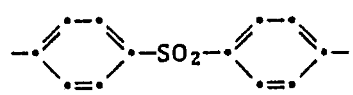 und

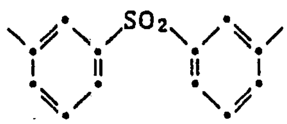 für $R^2$ in der Formel II, 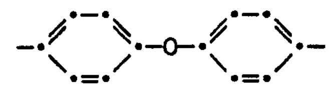 ,

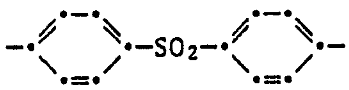 , 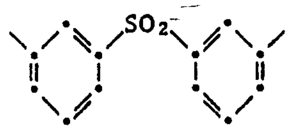 für $R^2$ in der Formel III.

Es hat sich gezeigt, dass sich Verbindungen mit einem hohen aromatischen Anteil besonders gut eignen. Es sind daher Polyamid-Polyimid-Blockcopolymere bevorzugt, deren aliphatischer bzw. cycloaliphatischer Anteil in $R^2$ nicht mehr als 5 Mol-% beträgt. Besonders bevorzugte Verbindungen besitzen als $R^2$ nur aromatische Gruppen, etwa solche, wie sie oben beispielhaft aufgezählt sind.

Enthalten die Brückenglieder $R^2$ einen zweiwertigen Rest Q, so handelt es sich beispielsweise um $-CH_2CH_2-$ und -S-, und bevorzugt um $-CH_2-$, $CH_3-C-CH_3$, -O-, $-SO_2-$ oder -C(O)-. Enthält ein Brückenglied $R^2$ mehrere Reste Q, so können diese gleich oder verschieden sein.

Der vierwertige Rest $R^3$ leitet sich von einer Tetracarbonsäure ab, die fähig ist, ein Dianhydrid zu bilden. Es handelt sich dabei z.B. um Gruppen

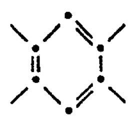 , 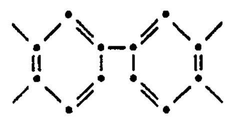

und insbesondere um

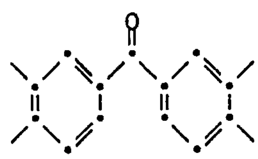 .

Die Herstellung der Verbindungen der Formel (I) erfolgt auf an sich bekannte Weise, beispielsweise indem man Polyamidsäuren der Formel IV

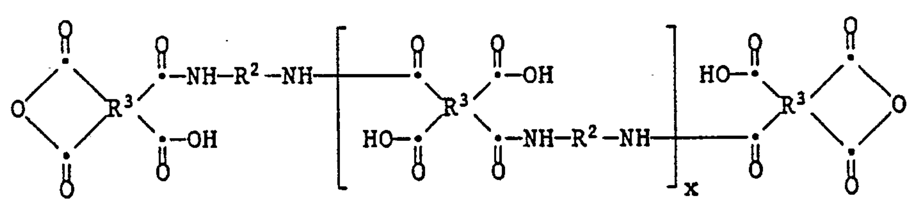 (IV)

mit Diaminen der Formel V

$H_2N-R^2-NH_2$ (V)

und mit Dicarbonsäuredichloriden der Formel VI

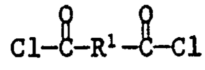 (VI)

umsetzt, und die so erhaltenen Polyamid-Polyamidsäure-Copolymere anschliessend cyclisiert. In den Formeln IV, V und VI haben die Symbole $R^1$, $R^2$, $R^3$ die oben angegebene Bedeutung und x steht für $\geqq 0$,

bevorzugt für ≥ 1.

Die Herstellung der Polyamidsäuren der Formel IV ist ebenfalls bekannt und erfolgt z.B. durch die Umsetzung von Tetracarbonsäure-dianhydriden der Formel VII

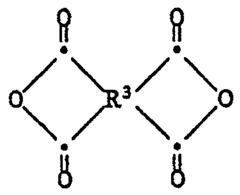 (VII)

worin $R^3$ die angegebene Bedeutung hat, mit einem Unterschuss eines Diamins der Formel V. Dabei ist es trivial und dem Fachmann geläufig wie er durch geeignete Reaktionsbedingung, z.B. durch geeignete Wahl der Molverhältnisse der Reaktionspartner die mittleren oben definierten Molekulargewichte (und damit x) der einzelnen Blöcke einstellen kann. Die Polykondensation der Di-oder Tetracarbonsäurederivate der Formeln VI bzw. VII mit den Diaminen der Formel V kann auf an sich bekannte Weise vorgenommen werden, vorzugsweise in einem wasserfreien organischen Lösungsmittel und unter Feuchtigkeitsausschluss, z.B. unter Stickstoff, bei Temperaturen zwischen etwa -20 °C und +50 °C, insbesondere etwa -15 °C bis +10 °C. Geeignete organische Lösungsmittel sind: N,N-Dimethylacetamid, N,N-Diethylacetamid, N,N-Dimethylformamid, N,N-Dimethylmethoxyacetamid, N-Methyl-2-pyrrolidon, N-Acetyl-2-pyrrolidon, N-Methyl-ε-caprolactam, N,N,N′,N′-Tetramethylharnstoff, Tetrahydrothiophendioxid (Sulfolan) und Dimethylsulfoxid.

Die Reaktion kann auch in Gemischen solcher Lösungsmittel durchgeführt werden. Andererseits ist es auch möglich, diese bevorzugten Lösungsmittelsysteme mit anderen organischen aprotischen Lösungsmitteln, wie aromatischen, cycloaliphatischen oder aliphatischen, gegebenenfalls chlorierten Kohlenwasserstoffen, beispielsweise Benzol, Toluol, Xylolen, Cyclohexan, Pentan, Hexan, Petrolether, Methylenchlorid, Tetrahydrofuran, Cyclohexanon und Dioxan, zu verdünnen.

Die Polyamidblöcke können auch mittels Grenzflächen-Polykondensation hergestellt werden.

Nach Beendigung der Umsetzung lassen sich die Lösungsmittel gewünschtenfalls auf übliche Weise entfernen, beispielsweise durch Abdestillieren, gegebenenfalls unter vermindertem Druck. Die Polyamid-Polyamidsäure-Blockcopolymere können falls gewünscht nach bekannten Methoden durch Eingiessen der Reaktionslösung in ein Fällungsmittel, wie Wasser oder aliphatische Kohlenwasserstoffe, z.B. Petrolether, besonders jedoch Methanol, Isopropanol, Aceton, Diethylether, beidseitige Ether des Mono-, Di- oder Triethylenglykols, oder Acetonitril, usw., ausgefällt und gegebenenfalls getrocknet werden.

Die Cyclisierung der Polyamid-Polyamidsäure-Blockcopolymere zu den entsprechenden Polyamid-Polyimid-Blockcopolymeren erfolgt, indem man die Polyamid-Polyamidsäure-Blockcopolymeren vorzugsweise ohne vorherige Isolation, d.h. direkt in der oben beschriebenen Reaktionslösung auf Temperaturen zwischen 50 und 300 °C erhitzt oder mit einem Dehydratisierungsmittel allein oder im Gemisch mit einem tertiären Amin behandelt. In Frage kommen z.B. Essigsäureanhydrid und Propionsäureanhydrid oder ein Gemisch aus Essigsäureanhydrid und Triethylamin oder Pyridin. Verfahren dieser Art sind beispielsweise in der US 3,894,114; US 4,124,651 oder US 4,503,285 beschrieben.

Die Verbindungen der Formel (I) können jedoch auch hergestellt werden, indem z.B. in an sich bekannter Weise zuerst der Polyamidblock aufgebaut und anschliessend durch Umsetzung mit Tetracarbonsäuredianhydrid und Diamin das Polyamidsäure-Polyamid-Blockcopolymere hergestellt wird, das anschliessend cyclisiert wird.

Ebenso ist es möglich, zuerst getrennt den Polyamidsäureblock und den Polyamidblock herzustellen und diese dann miteinander umzusetzen und anschliessend zu cyclisieren.

Die erfindungsgemässen Polyamid-Polyimid-Blockcopolymeren besitzen eine für die eingangs erwähnte Problemstellung gute Löslichkeit in aprotischen, dipolaren Lösungsmitteln. Sehr gute Löslichkeiten können beispielsweise in N-Methylpyrrolidon, Dimethylacetamid, Dimethylsulfoxid, Dimethylformamid, Sulfolan und Butyrolacton u.ä. gegebenenfalls unter Erwärmen beobachtet werden. Es ist zu erwähnen, dass eine hohe Konzentration der polymeren Verbindungen erwünscht ist. Die so hergestellten Lösungen sind im Gegensatz zur Polyamid-Polyamidsäure-Vorstufe lagerstabil. Das gleiche gilt natürlich auch für den Feststoff selbst.

Es gelingt auf diese Weise die Herstellung von Lösungen, welche frei von Nebenprodukten und Monomerresten sind. Die Verarbeitung erfolgt äusserst einfach, da kein Cyclisierungsschritt zu durchlaufen ist und damit keine Wasserabspaltung erfolgt, welche zu unerwünschten Effekten und Schädigung des Endprodukts führt. Bei der Anwendung der erfindungsgemässen Polyamid-Polyimid-Blockcopolymeren

muss lediglich das Lösungsmittel entfernt werden und es gelingt die Herstellung von Produkten hoher Qualität und hoher thermischer Stabilität mit der Möglichkeit zu hohen Gebrauchstemperaturen.

Die definitionsgemässen Blockcopolymeren zeichnen sich durch eine gute Verarbeitbarkeit aus und können in an sich bekannter, technisch einfacher Weise zur Herstellung von industriellen Erzeugnissen, wie Fasern, faserverstärkten Verbundwerkstoffen, Schichtkörpern, Giesskörpern, Laminaten, Matrixharzen, honeycomb core-Material, Lacken, Klebstoffen, Schaumstoffen, Ueberzugsmassen, Filmen (Folien), Press- und Sinterpulvern und Presskörpern verwendet werden.

Dazu können den Blockcopolymeren vor oder nach dem Verformen übliche Zusatzstoffe zugegeben werden, wie Pigmente, Füllstoffe, elektrische Leiter, beispielsweise Russ oder Metallpartikel, Mittel zur Erhöhung der Abriebfestigkeit, Schmiermittel oder verstärkende Fasern, z.B. Kohlenstoff-, Bor- oder Glasfasern. Schaumstoffe werden z.B. dadurch erhalten, dass man den Polymeren vor der Aufarbeitung übliche Treibmittel und gegebenenfalls Füllstoffe zusetzt oder Luft, Kohlendioxid, Stickstoff oder dgl. in die Polymerenmasse bzw. Polymerenlösung einbläst. Schicht körper, welche definitionsgemässe Blockcopolymere enthalten, können gegebenenfalls mit die Oberflächeneigenschaften verbessernden Ueberzugsschichten, z.B. aus Phenolharzen, Aluminium usw., versehen werden und finden u.a. im Flugzeugbau Verwendung.

Definitionsgemässe Blockcopolymere, vorzugsweise in Form von Lösungen, können auch als Ueberzugsmassen und Klebstoffe und dgl. gegebenenfalls unter Zusatz von Pigmenten, wie Titandioxid, üblichen Füll- und Schaumstoffen usw., zum Beschichten und Ueberziehen von Substraten der verschiedensten Art in beliebiger Form, wie Folien, Fasern, Faservliesen, Drähten, gitterförmigen Strukturen, Geweben, Schaumstoffen usw., verwendet werden. Als geeignete Substrate seien erwähnt: Metalle, wie Kupfer, Messing, Aluminium, Eisen, Stahl; Asbest- und Glasfasermateralien; Polymere, wie Cellulosematerialien (Celluloseester oder -ether, Papier usw.); Perfluorkohlenstoffpolymere, wie Polytetrafluorethylen; Polyolefine, Polyester, Polyamide, Polyimide, Polyurethane und dgl.

Anwendungstechnische Details sind z.B. den US 3,894,114 und US 4,503,285 beschrieben.

Beispiele 1-12

Polyamidsäureblock: in einem Doppelmantelreaktionsgefäss (1 ℓ) mit Schutzgasanschluss, Innenthermometer, Tropftrichter und Rührer werden unter Stickstoff 67,66 g (0,21 Mol) 3,3′,4,4′-Benzophenontetracarbonsäuredianhydrid und 220 g N-Methylpyrrolidon (NMP) eingewogen. Das Reaktionsgefäss wird dreimal evakuiert und mit Stickstoff begast. Nach Abkühlen auf -12° C ergibt sich eine Suspension. Ueber den Tropftrichter wird bei -12° C im Verlauf von 40 Minuten eine Lösung von 44,69 g (0,18 Mol) 4,4′-Diaminodiphenylsulfon in 220 g NMP zugegeben. Danach lässt man die Reaktionsmischung auf Raumtemperatur kommen und rührt etwa drei Stunden nach.

Polyamid-Polyamidsäure-Blockcopolymeres: Nach dem erneuten Abkühlen auf -10° C lässt man über einen Tropftrichter weitere 96,84 g (0,39 Mol) 4,4′-Diaminodiphenylsulfon in 480 g NMP im Verlauf von 35 Minuten zutropfen. Im folgenden werden 73,70 g Isophthalsäuredichlorid (0,363 Mol) portionsweise zugegeben, so dass die Innentemperatur 0° C nicht übersteigt. Man benötigt etwa 80 Minuten, wobei die Lösung in zunehmendem Masse viskos wird. Die langsam auf Raumtemperatur gebrachte Lösung wird 1 Stunde bei Raumtemperatur gerührt. Danach gibt man über einen Tropftrichter im Verlauf von 25 Minuten 54,1 g (0,75 Mol) Butylenoxid bei einer Innentemperatur von 20° C zu und rührt weitere drei Stunden. Man erhält auf diese Weise eine Lösung eines Polyamid-Polyamidsäure-Blockcopolymeren mit einer inhärenten Viskosität von 0,82 dl/g (0,5 Gew.-% an Feststoff in NMP/25° C).

Cyclisierung: Die nun vorliegende Polyamid-Polyamidsäure-Blockcopolymeren-Lösung wird nun der Cyclisierung zum Polyamid-Polyimid-Blockcopolymeren unterzogen. Dazu erfolgt über einen Tropftrichter die Zugabe von 85,0 g (0,84 Mol) Triethylamin im Verlauf von etwa 20 Minuten und danach die Zugabe von 85,76 g (0,84 Mol) Acetanhydrid. Die Reaktionsmischung wird noch 1 Stunde bei Raumtemperatur gerührt. Die inhärente Viskosität (0,5 %, NMP, 25° C) eines so hergestellten Polyamid-Polyimid-Blockcopolymeren beträgt 0,80 dl/g. Die Lösung des Polymeren lässt sich unverändert über 6 Monate bei 5° C aufbewahren.

Ein Teil der oben beschriebenen Lösung wird mit der gleichen Menge NMP verdünnt, in der 10fachen Menge Isopropanol ausgefällt und im Vakuumtrockenschrank getrocknet. Die Temperatur wird dabei innerhalb von 72 Stunden stufenweise auf 240° C erhöht und bei dieser Temperatur weitere 8 Stunden belassen. Das Polymere ist nach diesem Trockenprozess zu 34 % in NMP löslich, sowie in geringerem Masse in Dimethylacetamid, Dimethylformamid, Dimethylsulfoxid und Butyrolacton. Die inhärente Viskosität (0,5 %, NMP, 25° C) des Produktes beträgt 0,61 dl/g.

Die in der Tabelle angegebenen Beispiele 2-12 werden in entsprechender Weise hergestellt.

<u>Tabelle</u> Polyamid-Polyimid-Blockcopolymere, die analog Beispiel 1 hergestellt wurden.

| Nr. | PI-Block | | PA-Block | | Viskosität ηinh. [dl/g] | | Lösl. in NMP [Gew.-%] |
|---|---|---|---|---|---|---|---|
| | Tetracarbonsäuredianhydrid | Diamin | Dicarbonsäuredichlorid | Diamin | PA-PAS | PA-PI | |
| 2 | BTDA 0,0920 | mDDS/pDDS 0,0395/0,0395 | IPC 0,1625 | mDDS/pDDS 0,0855/0,0855 mol | 0,57 | 0,63 | 42 |
| 3 | BTDA 0,0726 | pDDS 0,0622 | IPC 0,109 | pDDS 0,1209 mol | 0,51 | 0,46 | 35 |
| 4 | BTDA 0,1440 | pDDS/DDE 0,1111/0,0123 | IPC 0,2507 | pDDS/DDE 0,2401/0,0267 mol | 1,37 | 0,51 | 17 |
| 5 | BTDA 0,0937 | pDDS 0,0854 | IPC 0,1038 | mPDA 0,1109 mol | 0,43 | 0,34 | 40 |
| 6 | BTDA 0,0978 | pDDS 0,0838 | IPC 0,0852 | pDDS 0,0979 mol | 0,60 | 0,73 | 35 |
| 7 | BTDA 0,0822 | pDDS 0,0740 | IPC 0,0253 | pDDS 0,03312 mol | 0,46 | 0,36 | 30 |
| 8 | BTDA 0,1192 | pDDS 0,0894 | IPC 0,3620 | pDDS 0,3876 mol | 0,96 | 0,66 | 35 |
| 9 | BTDA 0,3445 | pDDS 0,2953 | IPC 0,5915 | mDDS 0,640 mol | 0,99 | 0,74 | 20 |
| 10 | BTDA/PMDA 0,1391/0,1398 | pDDS 0,2391 | IPC 0,4803 | pDDS 0,5189 mol | 0,41 | 0,31 | 30 |
| 11 | BTDA 0,1439 | pDDS 0,1241 | IPC 0,2530 | pDDS 0,2674 mol | 0,43 | 0,36 | 35 |

| Nr. | PI-Block | | PA-Block | | Viskosität ηinh. [dl/g] | | Lösl. in NMP [Gew.-%] |
|---|---|---|---|---|---|---|---|
| | Tetracarbonsäuredianhydrid | Diamin | Dicarbonsäuredichlorid | Diamin | PA-PAS | PA-PI | |
| 12 | BTDA 0,2123 | pDDS 0,0592<br>mDDS 0,0591<br>mBAPB 0,0591 | IPC 0,326 | pDDS 0,1181 mol<br>mDDS 0,1181 mol<br>mBAPB 0,1181 mol | 0,86 | 0,69 | 35 |

BTDA: 3,3',4,4'-Benzophenontetracarbonsäuredianhydrid
PMDA: Pyromellitsäuredianhydrid
pDDS: 4,4'-Diaminodiphenylsulfon
IPC: Isophthalsäuredichlorid
mDDS: 3,3'-Diaminodiphenylsulfon
DDE: 4,4'-Diaminodiphenylether
mBAPB: 1,3-Bis-(3-aminophenoxy)benzol
mPDA: m-Phenylendiamin
NMP: N-Methylpyrrolidon
Viskosität: 0,5 Gew.-% Polymeres in NMP bei 25°C

Beispiel 13 Beispiel für die umgekehrte Herstellung des Blockcopolymeren, d.h. Polyamidblock vor dem Polyamidsäureblock.

Polyamidblock: In einem Doppelmantelreaktionsgefäss (1 l) mit Schutzgasanschluss, Innenthermometer, Tropftrichter und Rührer werden unter Stickstoff 23,25 g (0,0935 Mol) 4,4'-Diaminodiphenylsulfon und 168 g N-Methylpyrrolidon gegeben. Die resultierende Lösung wird auf -10° C gekühlt und das Reaktionsgefäss dreimal evakuiert und mit Stickstoff begast. Dazu gibt man 16,2 g (0,0798 Mol) festes Isophthalsäuredichlorid in fünf Portionen über einen Zeitraum von 30 Minuten. Die Lösung wird danach drei Stunden bei

Raumtemperatur gerührt.

Polyamidsäure-Polyamid-Blockcopolymeres: Nach erneutem Abkühlen auf 0 °C wird zu der Polyamidblock-Lösung über einen Tropftrichter eine Lösung von 19,38 g (0,0803 Mol) 4,4′-Diaminodiphenylsulfon in 175 g N-Methylpyrrolidon gegeben. Sodann gibt man 30,0 g (0,0931 Mol) 3,3′,4,4′-Benzophenontetracarbonsäuredianhydrid portionsweise im Verlauf von etwa 60 Minuten zu, wobei die Lösung in zunehmendem Masse viskos wird. Die langsam auf Raumtemperatur gebrachte Lösung wird zwei Stunden bei Raumtemperatur gerührt. Danach gibt man über einen Tropftrichter im Verlauf von 30 Minuten 12,4 g (0,1722 Mol) Butylenoxid bei einer Innentemperatur von 20 °C zu und rührt weitere drei Stunden. Man erhält auf diese Weise eine Lösung eines Polyamidsäure-Polyamid-Blockcopolymeren mit einer inhärenten viskosität von 0,46 dl/g (0,5 Gew.-% an Feststoff in NMP bei 25 °C).

Cyclisierung: Die Cyclisierung der nun vorliegenden Polyamid-Polyamidsäure-Blockcopolymeren-Lösung erfolgt durch Zugabe eines Gemisches aus 38,8 g (0,3830 Mol) Triethylamin und 40,3 g (0,3950 Mol) Acetanhydrid. Die inhärente Viskosität (0,5 % Feststoff, NMP, 25 °C) des Polyimid-Polyamid-Blockcopolymeren beträgt 0,41 dl/g.

Ein Teil der oben beschriebenen Polyimid-Polyamid-Lösung wird mit der gleichen Menge NMP verdünnt, in der 10fachen Menge Isopropanol ausgefällt und im Vakuumtrockenschrank getrocknet. Die Temperatur wird dabei innerhalb von 72 Stunden stufenweise auf 240 °C erhöht und bei dieser Temperatur acht Stunden belassen. Das Polymere ist nach diesem Trocknungsprozess zu mehr als 15 % in NMP löslich. Die inhärente Viskosität (0,5 %, NMP, 25 °C) des Produktes beträgt 0,40 dl/g.

Beispiel 14

Beispiel für die getrennte Herstellung der beiden Blöcke

Polyamidsäureblock: In einem Doppelmantelreaktionsgefäss (1 l) mit Schutzgasanschluss, Innenthermometer, Tropftrichter und Rührer werden unter Stickstoff 41,30 g (0,1282 Mol) 3,3′,4,4′-Benzophenontetracarbonsäuredianhydrid und 124 g NMP vorgelegt. Das Reaktionsgefäss wird dreimal evakuiert und mit Stickstoff begast. Nach Abkühlen auf -10 °C ergibt sich eine Suspension. Ueber den Tropftrichter wird im Verlauf von 60 Minuten eine Lösung von 27,37 g (0,110 Mol) 4,4′-Diaminodiphenylsulfon in 103 g N-Methylpyrrolidon zugegeben. Danach lässt man die Reaktionsmischung auf Raumtemperatur kommen und rührt etwa drei Stunden nach.

Polyamidblock: In einem weiteren Doppelmantelreaktionsgefäss (1 l) mit Schutzgasanschluss, Innenthermometer, Tropftrichter und Rührer werden 33,7 g (0,1357 Mol) 4,4′-Diaminodiphenylsulfon in 126 g N-Methylpyrrolidon vorgelegt. Das Reaktionsgefäss wird dreimal evakuiert und mit Stickstoff begast und dann auf -8 °C abgekühlt. Im Verlauf von 70 Minuten werden sodann 22,31 g (0,11 Mol) Isophthalsäuredichlorid in fünf Portionen zugegeben. Die langsam auf Raumtemperatur gebrachte Lösung wird drei Stunden gerührt. Ueber den Tropftrichter gibt man nun 12,0 g (0,167 Mol) Butylenoxid im Verlauf von 15 Minuten zu und rührt danach weitere 30 Minuten bei Raumtemperatur.

Polyamid-Polyamidsäureblock: Man lässt unter starkem Rühren die Polyamidlösung in die Polyamidsäurelösung bei einer Temperatur zwischen 0 und 10 °C unter Schutzgas einfliessen. Das Reaktionsgefäss wird sodann mit 100 g N-Methylpyrrolidon nachgespült und die Mischung eine Stunde bei 10 °C gerührt. Ueber einen Tropftrichter werden weitere 5,9 g (0,0818 Mol) Butylenoxid zugegeben und etwa eine Stunde bei Raumtemperatur gerührt.

Man erhält auf diese Weise eine Lösung eines Polyamid-Polyamidsäure-Blockcopolymeren mit einer inhärenten Viskosität von 0,21 dl/g (0,5 Gew.-% an Feststoff in NMP bei 25 °C).

Cyclisierung: Die Cyclisierung der nun vorliegenden Polyamid-Polyamidsäure-Blockcopolymeren-Lösung erfolgt durch Zugabe eines Gemisches aus 68,61 g (0,6780 Mol) Triethylamin und 75,22 g (0,7368 Mol) Acetanhydrid. Die inhärente Viskosität (0,5 % Feststoff, NMP, 25 °C) des Polyimid-Polyamid-Blockcopolymeren beträgt 0,24 dl/g.

Ein Teil der oben beschriebenen Polyimid-Polyamid-Lösung wird mit der gleichen Menge NMP verdünnt, in der 10fachen Menge Isopropanol ausgefällt und im Vakuumtrockenschrank getrocknet. Die Temperatur wird dabei innerhalb von 72 Stunden stufenweise auf 240 °C erhöht und bei dieser Temperatur acht Stunden belassen. Das Polymere ist nach diesem Trockenprozess zu 20 % in NMP löslich. Die inhärente Viskosität (0,5 %, NMP, 25 °C) des Produktes beträgt 0,23 dl/g.

## Ansprüche

1. Polyamid-Polyimid-Blockcopolymere mit einem mittleren Molekulargewicht $\overline{M}_n$ von 1000-50'000 enthaltend wiederkehrende Einheiten der Formel I

$$\{(PA)-(PI)\} \quad (I),$$

worin (PA) für einen Polyamidblock mit einem mittleren Molekulargewicht $\overline{M}_n$ von 300-20'000 steht, enthaltend mindestens eine (wiederkehrende) Einheit der Formel II

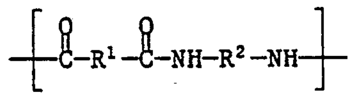 (II),

worin $R^1$ 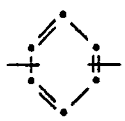 , 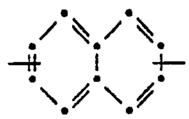 oder 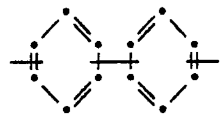 ist, und

$R^2$ $-\left(C_nH_{2n}\right)-$ , 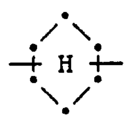 , 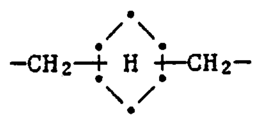 , 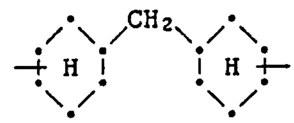 ,

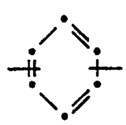 , 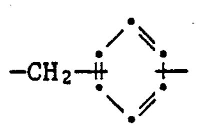 , 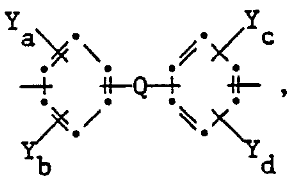 , 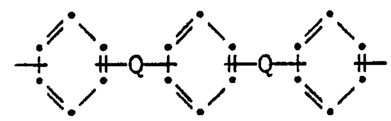

oder 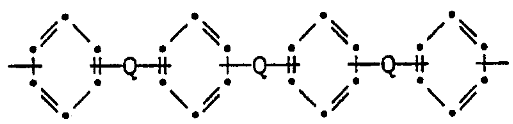 bedeutet, worin

Q die direkte Bindung, $-CH_2-$, $-CH_2CH_2-$, $CH_3-\overset{|}{\underset{|}{C}}-CH_3$, -O-, -S-, $-SO_2-$, oder -C(O)- ist, und n 2-12 ist, und $Y_a$, $Y_b$, $Y_c$ und $Y_d$ unabhängig voneinander Wasserstoff, Halogen oder $C_1$-$C_4$-Alkyl bedeuten, und (PI) für einen Polyimidblock mit einem mittleren Molekulargewicht $\overline{M}_n$ von 300-20'00 steht, enthaltend mindestens eine (wiederkehrende) Einheit der Formel III

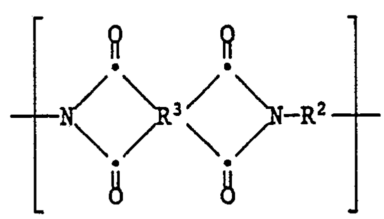 (III),

worin $R^3$ 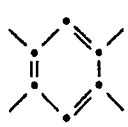 , 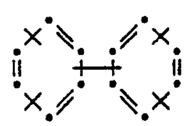 oder 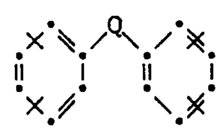 ist,

und Q und $R^2$ die oben angegebene Bedeutung haben, mit der Massgabe, dass 25-100 Mol-% aller Brückenglieder

$R^2$ 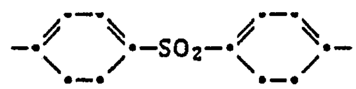

und/oder

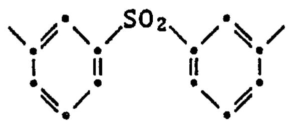

bedeuten, und der (cyclo-)aliphatische Anteil an Brückgliedern $R^2$ nicht mehr als 10 Mol-% beträgt.

2. Blockcopolymere gemäss Anspruch 1, dadurch gekennzeichnet, dass in der Formel II

$R^1$ 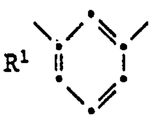

bedeutet.

3. Blockcopolymere gemäss Anspruch 1, dadurch gekennzeichnet, dass in den Formeln II und/oder III

$R^2$ 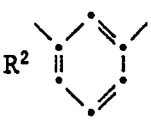 , 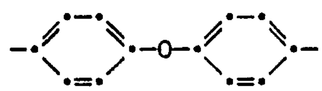 ,

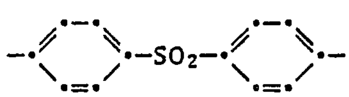 oder 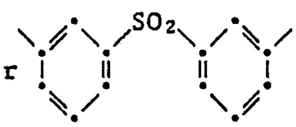

bedeutet.

4. Blockcopolymere gemäss Anspruch 1, dadurch gekennzeichnet, dass in der Formel III

$R^3$ 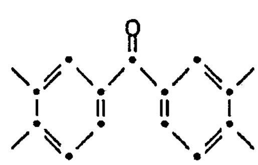

ist.

5. Blockcopolymere gemäss Anspruch 3, dadurch gekennzeichnet, dass in der Formel III $R^2$

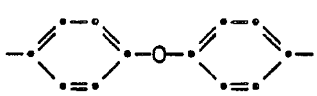 , 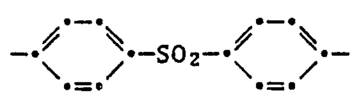 oder 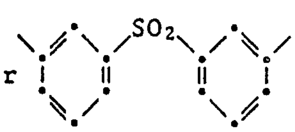

bedeutet.

6. Blockcopolymere gemäss Anspruch 1, dadurch gekennzeichnet, dass 50-100 Mol-% aller Brückenglieder

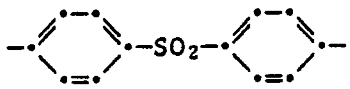

oder

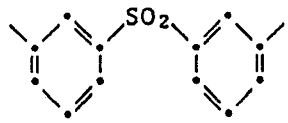

bedeuten.

7. Blockcopolymere gemäss Anspruch 1, dadurch gekennzeichnet, dass der (cyclo-)aliphatische Anteil an Brückengliedern $R^2$ nicht mehr als 5 Mol-% beträgt.

8. Blockcopolymere gemäss Anspruch 1, dadurch gekennzeichnet, dass alle Brückenglieder $R^2$ aromatisch sind.

9. Blockcopolymere gemäss Anspruch 1, dadurch gekennzeichnet, dass die Brückenglieder $R^2$ in der Formel II

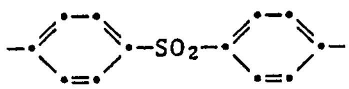

und/oder

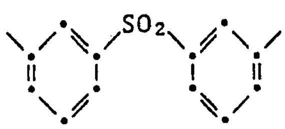

bedeuten.

10. Blockcopolymere gemäss Anspruch 1, dadurch gekennzeichnet, dass die Brückenglieder $R^2$ in der Formel III

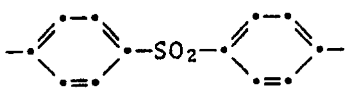

und/oder

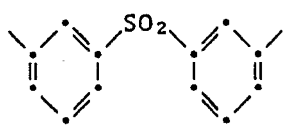

bedeuten.